# EUROPEAN PATENT SPECIFICATION

(11) **EP 3 550 870 B1**
(45) Date of publication and mention of the grant of the patent: **19.08.2020**
(21) Application number: 19166964.7
(22) Date of filing: 03.04.2019
(51) Int. Cl.: H04W 24/00

(54) **METHOD FOR CONSTRUCTING LOGGED MEASUREMENT ENTRY AND DEVICE SUPPORTING THE SAME**
VERFAHREN ZUM AUFBAU EINES PROTOKOLLIERTEN MESSUNGSEINTRAGS UND VORRICHTUNG ZUR UNTERSTÜTZUNG DAVON
PROCÉDÉ DE CONSTRUCTION D'ENTRÉE DE MESURE ENREGISTRÉE ET DISPOSITIF LE PRENANT EN CHARGE

(30) Priority: 03.04.2018 KR 20180038781
(43) Date of publication of application: 09.10.2019
(73) Proprietor: LG Electronics Inc., 07336 SEOUL (KR)
(72) Inventor: KIM, Hongsuk, 06772 Seoul (KR); LEE, Youngdae, 06772 Seoul (KR); LEE, Jaewook, 06772 Seoul (KR)
(74) Representative: Maikowski & Ninnemann Patentanwälte Partnerschaft mbB

(56) References cited:
- EP-A1- 2 934 039
- NOKIA SIEMENS NETWORKS (RAPPORTEUR): "Miscellaneous MDT corrections", 3GPP DRAFT; 37320_CR0056_(REL-11)_R2-130662, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. St. Julian's, Malta; 20120128 - 20120201 18 February 2013 (2013-02-18), XP051636664, Retrieved from the Internet: URL:http://www.3gpp.org/ftp/tsg%5Fran/TSG% 5FRAN/TSGR%5F59/Docs/RP%2D130240%2EZIP [retrieved on 2013-02-18]
- "Universal Mobile Telecommunications System (UMTS); LTE; Universal Terrestrial Radio Access (UTRA) and Evolved Universal Terrestrial Radio Access (E-UTRA); Radio measurement collection for Minimization of Drive Tests (MDT); Overall description; Stage 2 (3GPP TS 37.320 version 14.0.0 Release 14)", ETSI TECHNICAL SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE , vol. 3GPP RAN, no. V14.0.0 10 April 2017 (2017-04-10), pages 1-28, XP014292515, Retrieved from the Internet: URL:http://www.etsi.org/deliver/etsi_ts/13 7300_137399/137320/14.00.00_60/ts_137320v1 40000p.pdf [retrieved on 2017-04-10]
- "3 Generation Partnership Project; Technical Specification Group Radio Access Network; Evolved Universal Terrestrial Radio Access (E-UTRA); User Equipment (UE) procedures in idle mode (Release 14)", 3GPP STANDARD; TECHNICAL SPECIFICATION; 3GPP TS 36.304, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V14.6.0, 2 April 2018 (2018-04-02), pages 1-50, XP051450722, [retrieved on 2018-04-02]

## Description

### TECHNICAL FIELD

The present disclosure generally relates to a wireless communication system.

### BACKGROUND

Efforts have been made to develop an improved 5^{th}-generation (5G) communication system or a pre-5G communication system in order to satisfy a growing demand for radio data traffic. A standardization act for a 5G mobile communication standard work has been formally started in 3GPP, and there is ongoing discussion in a standardization working group under a tentative name of a new radio access (NR).

EP 2 934 039 A1 relates to a technique for reporting events from a mobile device to a cellular network is provided. The mobile device is wirelessly connectable to the cellular network. As to a method aspect of the technique, records of the events are stored while the mobile device is out of network coverage. The stored records are reported to the cellular network when the mobile device is wirelessly connected to the cellular network.

The document by NOKIA SIEMENS NETWORKS (RAPPORTEUR): "Miscellaneous MDT corrections", 3GPP DRAFT; 37320_CR0056_(REL-11)_R2-130662, 3RD GENERATION PARTNERSHIP PROJECT (3GPP), MOBILE COMPETENCE CENTRE ; 650, ROUTE DES LUCIOLES : F-06971 SOPHIA-ANTIPOLIS CEDEX: FRANCE val RAN WG2 no. St. Julian's, Malta; 20120128- 20120201 18 February 2013 (2013-02-18), addresses an overview and overall description of the minimization of drive tests functionality. The document describes functions and procedures to support collection of DE-specific measurements for MDT using Control Plane architecture, for both UTRAN and E-UTRAN.

### SUMMARY

The invention is set out in the appended set of claims.

Implementations of the described techniques may include hardware, a method or process, or computer software on a computer-accessible medium.

Other implementations of this and other aspects include corresponding systems, apparatuses, and computer programs, configured to perform the actions of the methods, encoded on computer storage devices. A system of one or more computers can be so configured by virtue of software, firmware, hardware, or a combination of them installed on the system that in operation cause the system to perform the actions. One or more computer programs can be so configured by virtue of having instructions that, when executed by data processing apparatus, cause the apparatus to perform the actions.

All or part of the features described throughout this disclosure may be implemented as a computer program product including instructions that are stored on one or more non-transitory machine-readable storage media, and that are executable on one or more processing devices. All or part of the features described throughout this disclosure may be implemented as an apparatus, method, or electronic system that can include one or more processing devices and memory to store executable instructions to implement the stated functions.

The details of one or more implementations of the subject matter of this disclosure are set forth in the accompanying drawings and the description below. Other features, aspects, and advantages of the subject matter will become apparent from the description, the drawings, and the claims.

### BRIEF DESCRIPTION OF THE DRAWINGS

FIG. 1 shows an example of a wireless communication system to which technical features of the present disclosure can be applied;
FIG. 2 shows another example of a wireless communication system to which technical features of the present disclosure can be applied;
FIG. 3 shows a block diagram of an example of a user plane protocol stack to which technical features of the present disclosure can be applied;
FIG. 4 shows a block diagram of an example of a control plane protocol stack to which technical features of the present disclosure can be applied;
FIG. 5 shows an example of states and state transitions and procedures in RRC_IDLE;
FIG. 6 shows an example of logged measurement configuration procedure;
FIG. 7 shows an example of constructing logged measurement entry according to an implementation of the present disclosure;
FIG. 8 shows an example of constructing logged measurement entry according to an implementation of the present disclosure;
FIG. 9 shows an example of a structure of UE according to an implementation of the present disclosure;
FIG. 10 shows an example of constructing logged measurement entry according to an implementation of the present disclosure; and
FIG. 11 shows an example of a structure of network according to an implementation of the present disclosure.

### DETAILED DESCRIPTION

Systems and techniques are disclosed herein for constructing logged measurement entries. Devices may perform one or more measurements regarding a wireless communication network, and may log the measurement results. The logged measurement results may then be reported or retrieved. Logging of measurement results may be performed in a variety of scenarios and for a variety of procedures. In some implementations, the measurement logging may depend on a state of the device.

As an example of a procedure for which measurement logging may be performed, Minimization of Drive Tests (MDT) is a feature that allows harvesting of network coverage and quality information from customer user equipments (UEs) as the UEs move within coverage areas of a radio access network (RAN). This can provide better quality data, at a lower cost, than that produced by a RAN operator performing drive testing of the RAN using test UEs.

In some systems, a UE that operates in an RRC_IDLE state performs a logged MDT procedure when the UE is camping on a serving cell. In such systems, UE is camped on a serving cell in an RRC_IDLE state in order to perform logged MDT procedure. However, in such systems, information regarding out-of-service area is typically not logged in the MDT procedure. In such scenarios, the lack of logged MDT procedures for out-of-service areas may pose challenges, for example, for the network operators who want to know the specific status of coverage areas.

Implementations disclosed herein can provide a solution to support more efficient MDT information including information regarding out-of-service areas.

The technical features described below may be used by a communication standard by the 3rd generation partnership project (3GPP) standardization organization, a communication standard by the institute of electrical and electronics engineers (IEEE), etc. For example, the communication standards by the 3GPP standardization organization include long-term evolution (LTE) and/or evolution of LTE systems. The evolution of LTE systems includes LTE-advanced (LTE-A), LTE-A Pro, and/or 5G new radio (NR). The communication standard by the IEEE standardization organization includes a wireless local area network (WLAN) system such as IEEE 802.11a/b/g/n/ac/ax. The above system uses various multiple access technologies such as orthogonal frequency division multiple access (OFDMA) and/or single carrier frequency division multiple access (SC-FDMA) for downlink (DL) and/or uplink (DL). For example, only OFDMA may be used for DL and only SC-FDMA may be used for UL. Alternatively, OFDMA and SC-FDMA may be used for DL and/or UL.

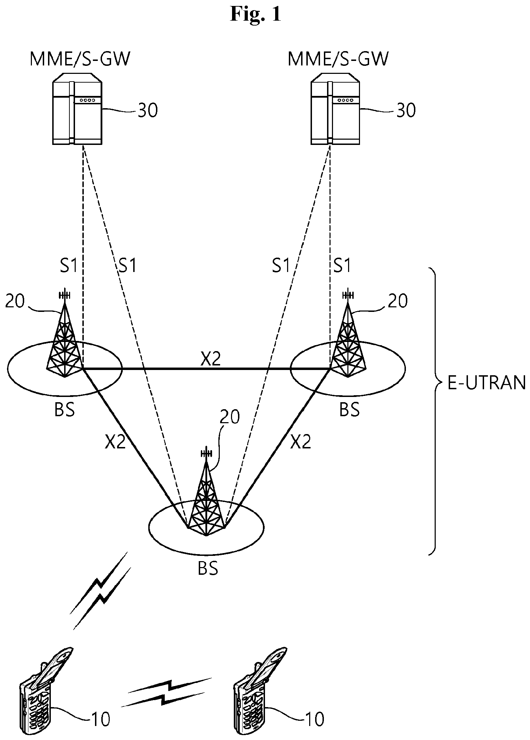

FIG. 1 shows an example of a wireless communication system to which technical features of the present disclosure can be applied. Specifically, FIG. 1 shows a system architecture based on an evolved-UMTS terrestrial radio access network (E-UTRAN). LTE may be a part of an evolved-UTMS (e-UMTS) using the E-UTRAN.

Referring to FIG. 1, the wireless communication system includes one or more user equipment (UE; 10), an E-UTRAN and an evolved packet core (EPC). As an example, the UE 10 may be a communication equipment carried by a user. The UE 10 may be fixed or mobile. The UE 10 may be referred to by various terminologies, such as a mobile station (MS), a user terminal (UT), a subscriber station (SS), a wireless device, etc.

The E-UTRAN consists of one or more base stations (BSs), such as BS 20. The BS 20 provides the E-UTRA user plane and control plane protocol terminations towards the UE 10. In some implementations, the BS 20 may be a fixed station that communicates with the UE 10. The BS 20 may host various functions, such as, for example, inter-cell radio resource management (MME), radio bearer (RB) control, connection mobility control, radio admission control, measurement configuration/provision, dynamic resource allocation (scheduler), etc. The BS may be referred to using various terminologies, such as an evolved NodeB (eNB), a base transceiver system (BTS), an access point (AP), etc.

A downlink (DL) denotes communication from the BS 20 to the UE 10. An uplink (UL) denotes communication from the UE 10 to the BS 20. A sidelink (SL) denotes communication between the UEs 10. In the DL, a transmitter may be a part of the BS 20, and a receiver may be a part of the UE 10. In the UL, the transmitter may be a part of the UE 10, and the receiver may be a part of the BS 20. In the SL, the transmitter and receiver may be a part of the UE 10.

The EPC includes a mobility management entity (MME), a serving gateway (S-GW) and a packet data network (PDN) gateway (P-GW). The MME hosts various functions, such as, for example, non-access stratum (NAS) security, idle state mobility handling, evolved packet system (EPS) bearer control, etc. The S-GW hosts various functions, such as, for example, mobility anchoring, etc. The S-GW is a gateway having an E-UTRAN as an endpoint. For convenience, MME/S-GW 30 will be referred to herein simply as a "gateway," but it is understood that this entity includes both the MME and S-GW. The P-GW hosts various functions, such as, for example, UE Internet protocol (IP) address allocation, packet filtering, etc. The P-GW is a gateway having a PDN as an endpoint. The P-GW is connected to an external network.

The UE 10 is connected to the BS 20 by an interface, such as the Uu interface. The UEs 10 are interconnected with each other by an interface, such as the PC5 interface. The BSs 20 are interconnected with each other by an interface, such as the X2 interface. The BSs 20 are also connected by the S1 interface to the EPC, more specifically may be connected to the MME by the S1-MME interface and may be connected to the S-GW by the S1-U interface. In some implementations, the S1 interface supports a many-to-many relation between MMEs, S-GWs, and BSs.

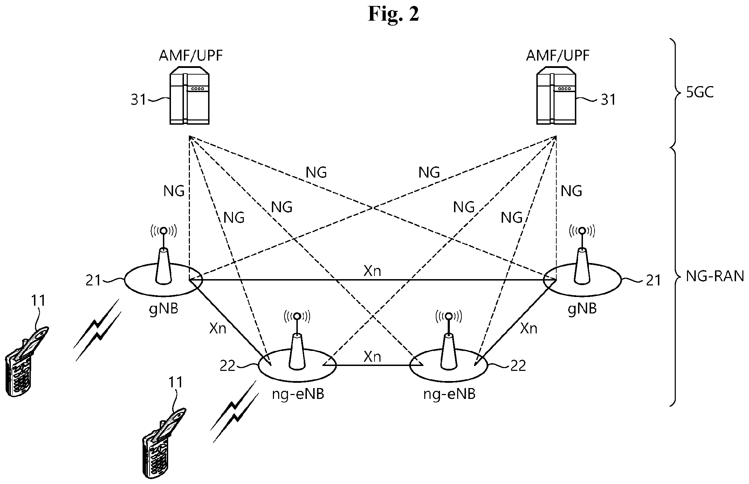

FIG. 2 shows another example of a wireless communication system to which technical features of the present disclosure can be applied. Specifically, FIG. 2 shows a system architecture based on a 5G new radio access technology (NR) system. The entity used in the 5G NR system (hereinafter, simply referred to as "NR") may implement some or all of the functions of the entities introduced in FIG. 1 (e.g., the eNB, MME, S-GW). The entity used in the NR system may be identified by the name "NG."

Referring to FIG. 2, the wireless communication system includes one or more UE 11, a next-generation RAN (NG-RAN) and a 5th generation core network (5GC). The NG-RAN consists of at least one NG-RAN node. The NG-RAN node may be, for example, an entity corresponding to the BS 20 shown in FIG. 1. The NG-RAN node consists of at least one gNB 21 and/or at least one ng-eNB 22. The gNB 21 provides NR user plane and control plane protocol terminations towards the UE 11. The ng-eNB 22 provides E-UTRA user plane and control plane protocol terminations towards the UE 11.

The 5GC includes an access and mobility management function (AMF), a user plane function (UPF) and a session management function (SMF). The AMF hosts various functions, such as, for example, NAS security, idle state mobility handling, etc. The AMF hosts various functions, such as, for example, non-access stratum (NAS) security, idle state mobility handling, evolved packet system (EPS) bearer control, etc. The UPF hosts various functions, such as, for example, mobility anchoring, protocol data unit (PDU) handling. The UPF hosts various functions, such as, for example, mobility anchoring, etc. The SMF hosts various functions, such as, for example, UE IP address allocation, PDU session control, etc.

The gNBs and ng-eNBs are interconnected with each other by an interface, such as the Xn interface. The gNBs and ng-eNBs are also connected by NG interfaces to the 5GC, for example, to the AMF by the NG-C interface and to the UPF by the NG-U interface.

An example of a protocol structure between network entities described above is described. In the examples of FIG. 1 and/or FIG. 2, layers of a radio interface protocol between the UE and the network (e.g. NG-RAN and/or E-UTRAN) may be classified into a first layer (L1), a second layer (L2), and a third layer (L3), for example based on the lower three layers of the open system interconnection (OSI) model.

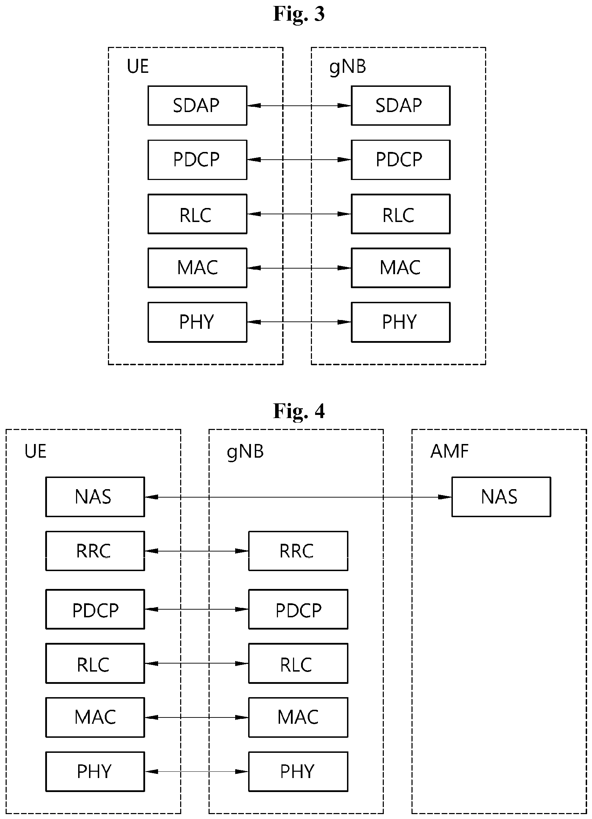

FIG. 3 shows a block diagram of an example of a user plane protocol stack to which technical features of the present disclosure can be applied. FIG. 4 shows a block diagram of an example of a control plane protocol stack to which technical features of the present disclosure can be applied.

Referring to the examples of FIG. 3 and FIG. 4, a physical (PHY) layer belongs to L1. The PHY layer offers information transfer services to the media access control (MAC) sublayer and higher layers. For example, the PHY layer offers transport channels to the MAC sublayer, and data between the MAC sublayer and the PHY layer is transferred via the transport channels. Between different PHY layers, e.g., between a PHY layer of a transmission side and a PHY layer of a reception side, data is transferred via physical channels.

The MAC sublayer belongs to L2. The services and functions of the MAC sublayer include, for example, mapping between logical channels and transport channels, multiplexing/de-multiplexing of MAC service data units (SDUs) belonging to one or different logical channels into/from transport blocks (TB) delivered to/from the physical layer on transport channels, scheduling information reporting, error correction through hybrid automatic repeat request (HARQ), priority handling between UEs by means of dynamic scheduling, priority handling between logical channels of one UE by means of logical channel prioritization (LCP), etc. The MAC sublayer offers to the radio link control (RLC) sublayer logical channels.

The RLC sublayer belong to L2. In some implementations, the RLC sublayer supports different transmission modes, e.g., transparent mode (TM), unacknowledged mode (UM), and acknowledged mode (AM). The different transmission modes may help guarantee various quality of services (QoS) required by radio bearers. The services and functions of the RLC sublayer may depend on the transmission mode. For example, in some implementations, the RLC sublayer provides transfer of upper layer PDUs for all three modes, but provides error correction through ARQ for AM only. In some implementations, such as implementations compatible with LTE/LTE-A, the RLC sublayer provides concatenation, segmentation and reassembly of RLC SDUs (only for UM and AM data transfer) and re-segmentation of RLC data PDUs (only for AM data transfer). In NR, the RLC sublayer provides segmentation (only for AM and UM) and re-segmentation (only for AM) of RLC SDUs and reassembly of SDU (only for AM and UM). In some implementations, the NR does not support concatenation of RLC SDUs. The RLC sublayer offers RLC channels to the packet data convergence protocol (PDCP) sublayer.

The PDCP sublayer belongs to L2. The services and functions of the PDCP sublayer for the user plane include, for example, header compression and decompression, transfer of user data, duplicate detection, PDCP PDU routing, retransmission of PDCP SDUs, ciphering and deciphering, etc. The services and functions of the PDCP sublayer for the control plane include, for example, ciphering and integrity protection, transfer of control plane data, etc.

The service data adaptation protocol (SDAP) sublayer belongs to L2. In some implementations, the SDAP sublayer is only defined in the user plane. The services and functions of SDAP include, for example, mapping between a QoS flow and a data radio bearer (DRB), and marking QoS flow ID (QFI) in both DL and UL packets. The SDAP sublayer offers QoS flows to 5GC.

A radio resource control (RRC) layer belongs to L3. In some implementations, the RRC layer is only defined in the control plane. The RRC layer controls radio resources between the UE and the network. For example, the RRC layer exchanges RRC messages between the UE and the BS. The services and functions of the RRC layer include, for example, broadcast of system information related to AS and NAS, paging, establishment, maintenance and release of an RRC connection between the UE and the network, security functions including key management, establishment, configuration, maintenance and release of radio bearers, mobility functions, QoS management functions, UE measurement reporting and control of the reporting, NAS message transfer to/from NAS from/to UE.

As such, in some implementations, the RRC layer controls logical channels, transport channels, and physical channels in relation to the configuration, reconfiguration, and release of radio bearers. A radio bearer refers to a logical path provided by L1 (PHY layer) and L2 (MAC/RLC/PDCP/SDAP sublayer) for data transmission between a UE and a network. In some scenarios, setting the radio bearer may include defining the characteristics of the radio protocol layer and the channel for providing a specific service, and setting each specific parameter and operation method. Radio bearers may include signaling RB (SRB) and data RB (DRB). The SRB is used as a path for transmitting RRC messages in the control plane, and the DRB is used as a path for transmitting user data in the user plane.

An RRC state indicates whether an RRC layer of the UE is logically connected to an RRC layer of the E-UTRAN. In some implementations, such as implementations compatible with LTE/LTE-A, when the RRC connection is established between the RRC layer of the UE and the RRC layer of the E-UTRAN, the UE is in the RRC connected state (RRC_CONNECTED); and otherwise, the UE is in the RRC idle state (RRC_IDLE). In implementations compatible with NR, the RRC inactive state (RRC_INACTIVE) is additionally introduced. The RRC_INACTIVE state may be used for various purposes. For example, in some scenarios, massive machine-type communications (MMTC) UEs can be efficiently managed in RRC_INACTIVE. When specific conditions are satisfied, transitions can be made from one of the above three states to others.

Various operations may be performed according to the RRC state. For example, in RRC_IDLE, operations such as public land mobile network (PLMN) selection, broadcast of system information (SI), cell re-selection mobility, core network (CN) paging and discontinuous reception (DRX) configured by NAS may be performed. The UE may be allocated an identifier (ID) which uniquely identifies the UE in a tracking area. In some implementations, no RRC context is stored in the base station.

As another example, in RRC_CONNECTED, the UE has an RRC connection with the network (i.e. E-UTRAN/NG-RAN). Network-CN connection (both C/U-planes) is also established for UE. In some implementations, the UE AS context is stored in the network and the UE. The RAN knows the cell which the UE belongs to, and the network can transmit and/or receive data to/from UE. In some implementations, network controlled mobility including measurement is also performed.

One or more operations that are performed in RRC_IDLE may also be performed in RRC_INACTIVE. However, in some implementations, instead of performing CN paging as in RRC_IDLE, RAN paging may be performed in RRC_INACTIVE. For example, in RRC_IDLE, paging for mobile terminated (MT) data is initiated by a core network and paging area is managed by the core network. In RRC_INACTIVE, paging may be initiated by NG-RAN, and RAN-based notification area (RNA) is managed by NG-RAN. Further, in some implementations, instead of DRX for CN paging configured by NAS in RRC_IDLE, DRX for RAN paging is configured by NG-RAN in RRC_INACTIVE. In some implementations, in RRC_INACTIVE, 5GC-NG-RAN connection (both C/U-planes) is established for UE, and the UE AS context is stored in NG-RAN and the UE. The NG-RAN may know the RNA which the UE belongs to.

The NAS layer is implemented above the RRC layer, as shown in the example of FIG. 4. The NAS control protocol performs various functions, such as, for example, authentication, mobility management, security control, etc.

Physical channels, for example as utilized by the PHY layer, may be modulated according to various modulation techniques utilizing time and frequency as radio resources. For example, the physical channels may consist of a plurality of orthogonal frequency division multiplexing (OFDM) symbols in time domain and a plurality of subcarriers in frequency domain. A subframe may be implemented, which consists of a plurality of OFDM symbols in the time domain. A resource block may be implemented as a resource allocation unit, and each resource block may consist of a plurality of OFDM symbols and a plurality of subcarriers. In addition, each subframe may use specific subcarriers of specific OFDM symbols (e.g., the first OFDM symbol) of the corresponding subframe for a specific purpose, such as for a physical downlink control channel (PDCCH), e.g., an L1/L2 control channel. A transmission time interval (TTI) may be implemented as a basic unit of time, for example as used by a scheduler for resource allocation. The TTI may be defined in units of one or a plurality of slots, or may be defined in units of mini-slots.

Transport channels may be classified according to how and with what characteristics data are transferred over the radio interface. For example, DL transport channels include a broadcast channel (BCH) used for transmitting system information, a downlink shared channel (DL-SCH) used for transmitting user traffic or control signals, and a paging channel (PCH) used for paging a UE. As another example, UL transport channels include an uplink shared channel (UL-SCH) for transmitting user traffic or control signals and a random access channel (RACH) normally used for initial access to a cell.

Different kinds of data transfer services may be offered by the MAC sublayer. Different logical channel types may be defined by what type of information is transferred. In some implementations, logical channels may be classified into two groups: control channels and traffic channels.

Control channels are used for the transfer of control plane information only, according to some implementations. The control channels may include, for example, a broadcast control channel (BCCH), a paging control channel (PCCH), a common control channel (CCCH) and a dedicated control channel (DCCH). The BCCH is a DL channel for broadcasting system control information. The PCCH is DL channel that transfers paging information, system information change notifications. The CCCH is a channel for transmitting control information between UEs and network. In some implementations, the CCCH is used for UEs having no RRC connection with the network. The DCCH is a point-to-point bi-directional channel that transmits dedicated control information between a UE and the network. In some implementations, the DCCH is used by UEs having an RRC connection.

Traffic channels are used for the transfer of user plane information only, according to some implementations. The traffic channels include, for example, a dedicated traffic channel (DTCH). The DTCH is a point-to-point channel, dedicated to one UE, for the transfer of user information. In some implementations, the DTCH can exist in both UL and DL.

In some scenarios, mappings may be implemented between the logical channels and transport channels. For example, in DL, BCCH can be mapped to BCH, BCCH can be mapped to DL-SCH, PCCH can be mapped to PCH, CCCH can be mapped to DL-SCH, DCCH can be mapped to DL-SCH, and DTCH can be mapped to DL-SCH. As another example, in UL, CCCH can be mapped to UL-SCH, DCCH can be mapped to UL- SCH, and DTCH can be mapped to UL-SCH.

UEs may perform one or more measurements regarding the wireless communication network, and may log the measurement results. The logged measurement results may then be reported or retrieved. Logging of measurement results may be performed in a variety of scenarios and for a variety of procedures. In some implementations, the measurement logging may depend on a state of the UE.

As an example, logging of measurement results may be performed for Minimization of Drive Tests (MDT) procedures. MDT may provide network operators with information regarding network performance optimization in a cost efficient manner. In some scenarios, MDT mechanisms may include logged MDT procedures by which a UE in RRC_IDLE state performs logging of measurement results, and reports the logged measurement when the UE enters RRC_CONNECTED state.

In some scenarios, support for logged MDT may comply with the principles for idle mode measurements in the UE. Furthermore, when the UE is in idle mode, measurement logging may be differentiated based on a state of the UE. For example, measurement logging may be differentiated based on whether the UE is in the idle mode in a "camped normally" state, an "any cell selection" state, or a "camped on any cell" state. In some implementations, when the UE is in the "camped normally" state, the UE performs measurement logging, and when the UE is in the "any cell selection" state and the "camped on any cell" state, the UE is not required to perform MDT measurement logging (including time and location information). For logged MDT, the configuration, the measurement collection, and the reporting of the measurement results will may be done in cells of the same RAT type.

Logged MDT measurements may be configured through a MDT measurement configuration procedure. In some implementations, the network may initiate the MDT measurement configuration procedure to the UE in RRC_CONNECTED by sending a LoggedMeasurementConfiguration message, which is used to transfer configuration parameters for logged MDT. This may be a unidirectional RRC signaling procedure. In some implementations, a release operation for logged measurement configuration in the UE is realized only by configuration replacement when the configuration is overwritten or by configuration clearance in case a duration timer stopping or expiration condition is met.

As an example, the logged measurement configuration consists of the following:
-- Configuration of the triggering of logging events. Only periodic downlink pilot strength measurement trigger is supported, for which the logging interval is configurable. The parameter specifies the periodicity for storing MDT measurement results, and may be configured in seconds in multiples of the applied IDLE mode discontinuous reception (DRX), e.g., in multiples of 1.28s which is either a factor or multiple of the IDLE mode DRX. The UE behaviour may be unspecified if the UE is configured with a DRX cycle larger than the logging interval.
-- Configuration of the logging duration. This configuration parameter defines a timer that is activated upon configuration, and that continues regardless of state changes, RAT or registered PLMN (RPLMN) changes. When the timer expires, the measurement logging is stopped and the configuration may be cleared. In some implementations, some parameters may be retained for further reporting, e.g., network absolute time stamp, trace reference, trace recording session reference and trace collection entity (TCE) identity (Id).
-- Network absolute time stamp may be used as a time reference to UE.
-- Trace reference parameter may be indicated by the Operations, Administration and Management (OAM) configuration.
-- Trace recording session reference may be indicated by the OAM configuration.
-- TCE Id may be indicated by the OAM configuration.
-- MDT PLMN List may indicate the PLMNs where measurement collection and log reporting is allowed. This may be a subset of an equivalent PLMN (EPLMN) list and the RPLMN at logged measurement configuration.
-- Configuration of a logging area. A UE may log measurements as long as the UE is within the configured logging area. The configured logging area may span PLMNs in the MDT PLMN List. If no area is configured, the UE may log measurements throughout the PLMNs of the MDT PLMN list.

The logged measurement configuration, such as the configuration described above, may be provided in a cell by dedicated control while the UE is in RRC_CONNECTED. In some implementations, the logged measurement configuration may be implemented according to the following:
-- logged measurement configuration is active in the IDLE UE state in E-UTRAN, or in the IDLE mode, CELL PCH, and URA_PCH states in UTRAN, and may remain active until a logging duration timer expires or stops.
-- logged measurement configuration and logs may be maintained when the UE is in any state as described above, even in scenarios of multiple periods interrupted by UE state transitions, e.g., when the UE is in CONNECTED state for E-UTRAN and CELL DCH, CELL_FACH state in UTRAN.
-- logged measurement configuration and logs are maintained when the UE is in any state as described above in that RAT, even in scenarios of multiple periods interrupted by UE presence in another RAT.

In some implementations, there is only one RAT-specific logged measurement configuration for logged MDT in a UE. When the network provides a configuration, any previously configured logged measurement configuration may be entirely replaced by the new configuration. Moreover, in such scenarios, logged measurements corresponding to the previous configuration may be cleared. In some implementations, it may be left up to the network to retrieve any relevant data before providing a new configuration.

When a logging area is configured, logged MDT measurements may be performed as long as the UE is within the configured logging area. If no logging area is configured, then logged MDT measurements may be performed as long as the RPLMN is part of the MDT PLMN list. When the UE is not in the logging area or the RPLMN is not part of the MDT PLMN list, then the measurement logging may be suspended; for example, the logged measurement configuration and the log are kept but measurement results are not logged.

In some implementations, if a logged measurement configuration is provided by a new PLMN that does not belong to the MDT PLMN list, then any previously configured logged measurement configuration and corresponding log may be cleared and overwritten without being retrieved.

In some implementations, if the UE is in the "camp normally" state, then the UE may perform logging as per the logged measurement configuration. This state may include, for example, a period between cell selection criteria not being met and the UE entering "any cell selection" state, e.g., 10 seconds for E-UTRA or 12 seconds for UTRA. In some implementations, if the UE is in the "any cell selection" state or the "camped on any cell" state, then the UE may stop periodic logging. However, in some scenarios, the UE may keep the duration timer running. If the UE subsequently re-enters the "camped normally" state and the duration timer has not expired, then the UE may re-start the periodic logging based on new DRX and may resume (e.g., automatically resume) logging, in some cases with a leap in time stamp.

In some implementations, the measurement quantity may be fixed for logged MDT and may not be dynamically configurable. The measurement quantity (sometimes referred to simply as "quantities" herein, for measurement) may consist of both reference signal received power (RSRP) and reference signal received quality (RSRQ) for E-UTRA, both received signal code power (RSCP) and signal-to-noise ratio (e.g., Ec/No) for UTRA, primary common control physical channel (P-CCPCH) RSCP for UTRA 1.28 time division duplex (TDD), received signal level (e.g., Rxlev) for GSM/EDGE radio access network (GERAN), and pilot pseudonoise (pn) phase and pilot strength for CDMA2000 if the serving cell is E-UTRAN cell.

The UE may collect MDT measurements and continue logging according to the logged measurement configuration until the UE memory that is reserved for MDT is full, according to some implementations. In such implementations, the UE stops logging, stops the log duration timer, and starts a 48-hour timer.

In some implementations, a UE that is configured to perform logged MDT measurements may indicate the availability of logged MDT measurements. For example, the UE may indicate the availability of logged MDT measurements by using an indicator in the *RRCConnectionSetupComplete* message during connection establishment. In some implementations, the indicator (possibly updated) may be provided within E-UTRAN handover and re-establishment, and UTRAN procedures involving the change of serving RNC (SRNC) (SRNC relocation), CELL UPDATE, URA UPDATE messages as well as MEASUREMENT REPORT message in case of state transition to CELL_FACH without CELL UPDATE. In some implementations, the UE may include the indication in one of these messages at every transition to the RRC Connected mode, even if the logging period has not ended, upon connection to RAT which configured the UE to perform logged MDT measurements and RPLMN which is equal to a PLMN in the MDT PLMN list. The indicator may be also provided in the *UEInformationResponse* message during MDT report retrieval in scenarios where the UE has not transferred the total log in one RRC message in order to indicate the remaining data availability.

In some implementations, the UE does not indicate the availability of MDT measurements in another RAT or in a PLMN that is not in the MDT PLMN list.

The network may decide to retrieve the logged measurements based on this indication by the UE of the availability of logged MDT measurements. In case logged MDT measurements are retrieved before the completion of the pre-defined logging duration, the reported measurement results may be deleted, but MDT measurement logging may continue according to ongoing logged measurement configuration. In scenarios where the network does not retrieve logged MDT measurements, UE may store non-retrieved measurements for a duration of time (e.g., 48 hours) from when the duration timer for logging has expired. In some implementations, there may be no requirement to store non-retrieved data beyond this duration of time (e.g., 48 hours). In addition, in some implementations, logged measurement configurations and the log may be removed by the UE upon the UE switching off or detaching.

Next, examples of states and state transitions in the Idle Mode are described.

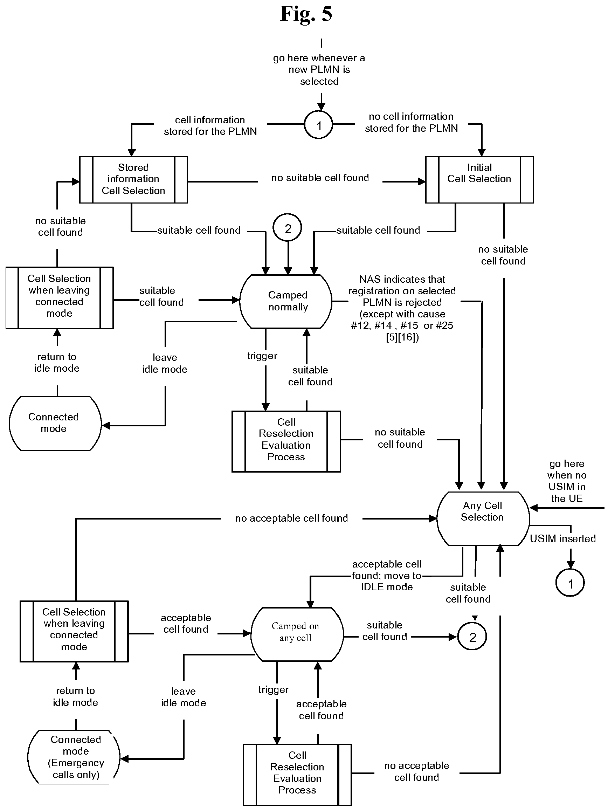

FIG. 5 shows examples of states and state transitions and procedures when a UE is in RRC_IDLE. In this example, whenever a new PLMN selection is performed, it is determined whether cell information is stored for the PLMN (1). Subsequently, depending on particular events, the UE may transition between various states, including the "camped normally" state, the "any cell selection" state, and the "camped on any cell" state.

For example, various events may cause the UE to transition to the "any cell selection" state. In particular, while performing initial cell selection procedure, when a suitable cell is not found, then the UE may transit to the "any cell selection" state. Also, when a UE is in the "camped normally" state and receives an indication that registration on the selected PLMN is rejected from a network, then the UE may enter the "any cell selection" state. Also, after a cell reselection evaluation process, if a suitable cell is not found, then the UE may enter the "any cell selection" state. Also, after cell selection when leaving the connected mode, if an acceptable cell is not found, then the UE may enter the "any cell selection" state. Further, a UE without a USIM may enter the "any cell selection" state.

Next, an example of the logged measurement configuration procedure is described. This procedure may be utilized to configure the UE to perform logging of measurement results while in RRC_IDLE, and to perform logging of measurement results for MBSFN in both RRC_IDLE and RRC_CONNECTED. The procedure may apply to logged measurements capable UEs that are in RRC_CONNECTED. In some implementations, E-UTRAN may retrieve stored logged measurement information through the UE information procedure.

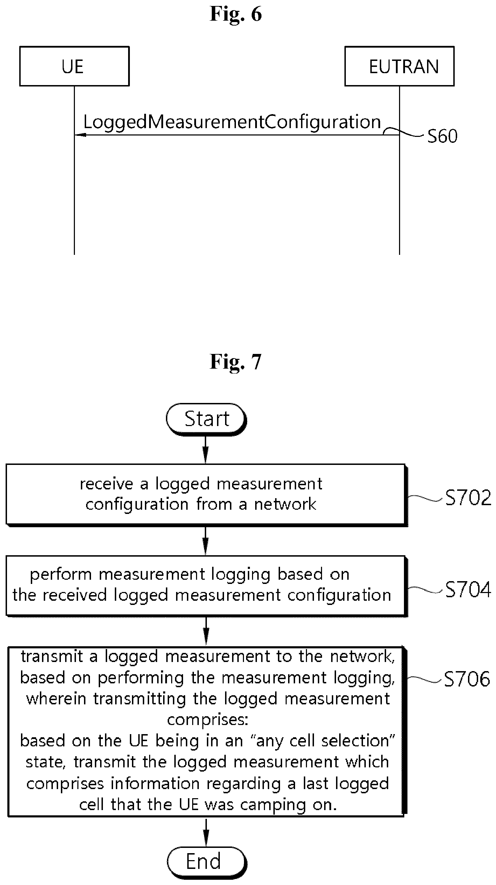

FIG. 6 shows an example of a logged measurement configuration procedure. In step S60, E-UTRAN initiates the logged measurement configuration procedure to the UE in RRC_CONNECTED, by sending a *LoggedMeasurementConfiguration* message.

In some implementations, upon receiving the *LoggedMeasurementConfiguration* message the UE performs the following operations:
1> discard the logged measurement configuration as well as the logged measurement information;
1> store the received loggingDuration, logginglnterval and areaConfiguration, if included, in VarLogMeasConfig;
1> if the LoggedMeasurementConfiguration message includes plmn-IdentityList:
2> set plmn-IdentityList in VarLogMeasReport to include the RPLMN as well as the PLMNs included in plmn-IdentityList;
1> else:
2> set plmn-IdentityList in VarLogMeasReport to include the RPLMN;
1> store the received absoluteTimelnfo, traceReference, traceRecordingSessionRef and tce-Id in VarLogMeasReport;
1> store the received targetMBSFN-AreaList, if included, in VarLogMeasConfig;
1> start timer T330 with the timer value set to the loggingDuration;

The measurements logging procedure specifies the logging of available measurements by a UE in RRC_IDLE that has a logged measurement configuration and the logging of available measurements by a UE in both RRC_IDLE and RRC_CONNECTED if *targetMBSFN-AreaList* is included in *VarLogMeasConfig.*

While the timer T330 is running, in some implementations the UE performs the following operations:
1> if measurement logging is suspended:
2> if during the last logging interval the IDC problems detected by the UE is resolved, resume measurement logging;
1> if not suspended, perform the logging in accordance with the following:
2> if targetMBSFN-AreaList is included in VarLogMeasConfig:
3> if the UE is camping normally on an E-UTRA cell or is connected to E-UTRA; and
3> if the RPLMN is included in plmn-IdentityList stored in VarLogMeasReport; and
3> if the PCell (in RRC CONNECTED) or cell where the UE is camping (in RRC_IDLE) is part of the area indicated by areaConfiguration if configured in VarLogMeasConfig:
4> for MBSFN areas, indicated in targetMBSFN-AreaList, from which the UE is receiving MBMS service:
5> perform MBSFN measurements in accordance with the performance requirements;

In some implementations, when configured to perform MBSFN measurement logging by targetMBSFN-AreaList, the UE is not required to receive additional MBSFN subframes, such that logging is based on the subframes corresponding to the MBMS services that the UE is receiving.
5> perform logging at regular time intervals as defined by the logginglnterval in VarLogMeasConfig, but only for those intervals for which MBSFN measurement results are available;
2> else if the UE is camping normally on an E-UTRA cell and if the RPLMN is included in plmn-IdentityList stored in VarLogMeasReport and, if the cell is part of the area indicated by areaConfiguration if configured in VarLogMeasConfig:
3> perform the logging at regular time intervals, as defined by the logginglnterval in VarLogMeasConfig;
2> when adding a logged measurement entry in VarLogMeasReport, include the fields in accordance with the following:
3> if the UE detected IDC problems during the last logging interval:
4> if measResultServCell in VarLogMeasReport is not empty:
5> include InDeviceCoexDetected;
5> suspend measurement logging from the next logging interval;
4> else:
5> suspend measurement logging;

The UE may detect the start of IDC problems.
3> set the relativeTimeStamp to indicate the elapsed time since the moment at which the logged measurement configuration was received;
3> if detailed location information became available during the last logging interval, set the content of the locationlnfo as follows:
4> include the locationCoordinates;
3> if WLAN-NameList is included in VarLogMeasConfig:
4> if detailed WLAN measurements are available:
5> include logMeasResultListWLAN, in order of decreasing RSSI for WLAN APs;
3> if BT-NameList is included in VarLogMeasConfig:
4> if detailed Bluetooth measurements are available:
5> include logMeasResultListBT, in order of decreasing RSSI for Bluetooth beacons;
3> if targetMBSFN-AreaList is included in VarLogMeasConfig:
4> for each MBSFN area, for which the mandatory measurements result fields became available during the last logging interval:
5> set the rsrpResultMBSFN, rsrqResultMBSFN to include measurement results that became available during the last logging interval;
5> include the fields signallingBLER-Result or dataBLER-MCH-ResultList if the concerned BLER results are availble,
5> set the mbsfh-AreaId and carrierFrequency to indicate the MBSFN area in which the UE is receiving MBSFN transmission;
4> if in RRC_CONNECTED:
5> set the servCellIdentity to indicate global cell identity of the PCell;
5> set the measResultServCell to include the layer 3 filtered measured results of the PCell;
5> if available, set the measResultNeighCells to include the layer 3 filtered measured results of SCell(s) and neighbouring cell(s) measurements that became available during the last logging interval, in order of decreasing RSRP, for at most the following number of cells: 6 intra-frequency and 3 inter-frequency cells per frequency and according to the following:
6> for each cell included, include the optional fields that are available;
5> if available, optionally set the measResultNeighCells to include the layer 3 filtered measured results of neighbouring cell(s) measurements that became available during the last logging interval, in order of decreasing RSCP(UTRA)/RSSI(GERAN)/PilotStrength(cdma2000), for at most the following number of cells: 3 inter-RAT cells per frequency (UTRA, cdma2000)/set of frequencies (GERAN), and according to the following:
6> for each cell included, include the optional fields that are available;
4> if in RRC_IDLE:
5> set the servCellIdentity to indicate global cell identity of the serving cell;
5> set the measResultServCell to include the quantities of the serving cell;
5> if available, set the measResultNeighCells, in order of decreasing ranking-criterion as used for cell re-selection, to include neighbouring cell measurements that became available during the last logging interval for at most the following number of neighbouring cells: 6 intra-frequency and 3 inter-frequency neighbours per frequency and according to the following:
6> for each neighbour cell included, include the optional fields that are available;
5> if available, optionally set the measResultNeighCells, in order of decreasing ranking-criterion as used for cell re-selection, to include neighbouring cell measurements that became available during the last logging interval, for at most the following number of cells: 3 inter-RAT cells per frequency (UTRA, cdma2000)/set of frequencies (GERAN), and according to the following:
6> for each cell included, include the optional fields that are available;
4> for the cells included according to the previous (e.g., covering previous and current serving cells as well as neighbouring EUTRA cells) include results according to the extended RSRQ if corresponding results are available according to the associated performance requirements;
4> for the cells included according to the previous (e.g., covering previous and current serving cells as well as neighbouring EUTRA cells) include RSRQ type if the result was based on measurements using a wider band or using all OFDM symbols;

In some implementations, the UE includes the latest results in accordance with the performance requirements. For example, RSRP and RSRQ results are available only if the UE has a sufficient number of results and/or receives a sufficient number of subframes during the logging interval.
3> else:
4> set the servCellIdentity to indicate global cell identity of the cell the UE is camping on;
4> set the measResultServCell to include the quantities of the cell the UE is camping on;
4> if available, set the measResultNeighCells, in order of decreasing ranking-criterion as used for cell re-selection, to include neighbouring cell measurements that became available during the last logging interval for at most the following number of neighbouring cells: 6 intra-frequency and 3 inter-frequency neighbours per frequency as well as 3 inter-RAT neighbours, per frequency/ set of frequencies (GERAN) per RAT and according to the following:
5> for each neighbour cell included, include the optional fields that are available;
4> for the cells included according to the previous (i.e. covering previous and current serving cells as well as neighbouring EUTRA cells) include results according to the extended RSRQ if corresponding results are available according to the associated performance requirements;
4> for the cells included according to the previous (i.e. covering previous and current serving cells as well as neighbouring EUTRA cells) include RSRQ type if the result was based on measurements using a wider band or using all OFDM symbols;

The UE includes the latest results of the available measurements as used for cell reselection evaluation in RRC_IDLE or as used for evaluation of reporting criteria or for measurement reporting in RRC CONNECTED, which are performed in accordance with the performance requirements.
2> when the memory reserved for the logged measurement information becomes full, stop timer T330 and perform the same actions as performed upon expiry of T330;

As described in the foregoing, in some scenarios, MDT mechanisms may include logged MDT procedures by which a UE in RRC_IDLE state performs logging of measurement results, and reports the logged measurement when the UE enters RRC_CONNECTED state.

In such scenarios, a UE in RRC_IDLE state performs logged MDT procedure when the UE is camping normally on a serving cell. The UE may be limited to performing logged MDT procedures when the UE is camping on a serving cell in RRC_IDLE state. Such logged MDT procedures may not support a UE performing measurement logging in an out-of-service area. Therefore, in such scenarios, the lack of logged MDT procedures for out-of-service areas may pose challenges, for example, for the network operators who want to know the specific status of coverage areas. Implementations disclosed herein can provide a solution to support more efficient MDT information including information on out-of-service area in RRC IDLE or RRC_CONNECTED.

Further compounding these challenges, in some scenarios, logged measurement entries may include information regarding a serving cell, such as cell identity (ID) and measurement result. The information regarding a serving cell may be a field (e.g., a mandatory field) of the logged measurement entry for logging MDT information. As such, if a UE in RRC_IDLE state is located in an out-of-service area, then information regarding a serving cell for the logged measurement entry may not be acquired completely, and the UE may not be able to perform the logged MDT procedure properly.

An example of constructing logged measurement entries is described next.

FIG. 7 shows an example of constructing logged measurement entry according to an implementation of the present disclosure. The procedures described below may be performed by at least one processor for the UE.

In step S702, the processor(s) may receive a logged measurement configuration from a network.

In step S704, the processor(s) may perform measurement logging based on the received logged measurement configuration.

In step S706, the processor(s) may transmit a logged measurement to the network, based on performing the measurement logging. The transmitting the logged measurement to the network may comprise: based on the UE being in an "any cell selection" state, transmitting the logged measurement which comprises information regarding a last logged cell that the UE was camping on. The information regarding the last logged cell that the UE was camping on may include a global cell identity of the last logged cell that the UE was camping on. The information regarding the last logged cell that the UE was camping on may comprise measurement quantities of the last logged cell that the UE was camping on. The measurement quantities of the last logged cell comprise at least one of a reference signal received power (RSRP), a reference signal received quality (RSRQ), a received signal code power (RSCP), a signal-to-noise ratio, a primary common control physical channel (P-CCPCH) RSCP, a received signal level, or a pilot pseudonoise (pn) phase and pilot strength. The logged measurement may further comprise an indication that the "any cell selection" state is detected. The "any cell selection" state may correspond to a state in which the UE did not find a suitable cell or acceptable cell to camp on. The "any cell selection" state may be a state in which the UE performs a cell selection process to find a suitable cell or acceptable cell to camp on. The last logged cell may be a most recent cell that the UE was camped on before the UE enters the "any cell selection" state. Wherein performing the measurement logging may comprise: performing the measurement logging when the UE is in a radio resource control (RRC) idle state, and wherein transmitting the logged measurement may comprise: transmitting the logged measurement when the UE is in an RRC connected state.

According to an implementation of the present disclosure, the UE may store or log the logged MDT information with information on an out-of-service area, when at least one of the following conditions is satisfied:
-- If the UE is not able to detect any cells for which at least one criteria (e.g., an S criteria) is fulfilled.
-- If no suitable or acceptable cell can be found.
-- If UE is in the "any cell selection" state.
-- If UE is in out-of-service.
-- If a serving cell quality, e.g., RSRP, RSRQ or SINR, does not satisfy a threshold criteria (e.g., is lower than a threshold) configured by network.

The "any cell selection" state may be applicable for RRC_IDLE and RRC_INACTIVE state. In the "any cell selection" state, the UE may perform cell selection process to find a suitable cell. In some implementations, if the cell selection process fails to find a suitable cell after a complete scan of all RATs and all frequency bands supported by the UE, then the UE may attempt to find an acceptable cell of any PLMN to camp on, e.g., by trying all RATs that are supported by the UE and searching first for a high quality cell. The UE, which is not camped on any cell, may stay in the "any cell selection" state until an acceptable cell is found. If an acceptable cell is found, then the UE may inform the NAS and may camp on this cell and obtain limited service, transitioning to the state "camped on any cell." Hereinafter, for purpose of simplicity of explanation, the scenario of UE in the "any cell selection" state is described. However, although the UE is described in the "any cell selection" in this description, other conditions referred to above may be applied to the implementation of the present disclosure. In some implementations, whether the conditions are met is determined based on a quality of the serving cell or neighbor cell.

According to an implementation of the present disclosure, the UE in RRC_IDLE state may perform the logged MDT procedure at regular time intervals even though the UE is in the "any cell selection" state, e.g., even though the UE is not camped on a cell "normally." In some implementations, the network may indicate the UE to acquire the out-of-service area information for MDT, but the UE also may be preconfigured to acquire the out-of-service area information for MDT. In some scenarios, before storing or logging the out-of-service area information for MDT, the UE may remove the oldest entry to secure storage for information regarding an out-of-service area.

According to an implementation of the present disclosure, when the UE in RRC_IDLE is in the "any cell selection" state, the UE may set the last serving cell information as the serving cell information of a current logged measurement entry. That is, the UE may consider the last serving cell information as the current serving cell information. The last serving cell information may be information on last serving cell, and the last serving cell may be, for example, a serving cell that the UE has been camped on properly before the UE enters the "any cell selection" state. The current logged measurement entry may refer to a measurement entry that the UE constructs to perform the logged MDT procedure. For example, the UE may fill the field for serving cell information in the logged measurement entry with the last serving cell information.

In an implementation of the present disclosure, the last serving cell information may refer to last logged serving cell information. The last logged serving cell information may include, for example, an ID of a last logged serving cell and a measurement result of the last logged serving cell. The last logged serving cell may refer to, for example, a last serving cell whose information is already logged. The last logged serving cell may be the latest logged serving cell that the UE has been camped on. For example, the UE may set the field *servCellIdentity* of the current logged measurement entry to indicate a global cell identity of the last logged serving cell that the UE was camping on. Further, the UE may set the field *measResultServCell* of the current logged measurement entry to include the measurement quantities of the last logged serving cell the UE was camping on.

For the current logged measurement entry which informs the out-of-service area, the last logged serving cell information may distinguish from the last stored serving cell information in measurement entry for MDT. When the last logged serving cell information is repeated on the current logged measurement entry, then this may enable the network to realize that the corresponding area is out-of-service. Specifically, the last logged serving cell information of the measurement entry may be considered to be same cell logging from the perspective of the cell information just prior to the last logged serving cell information. The last logged serving cell information may be treated as useless, because the same cell logging may indicate the out-of-service area.

In another exemplary implementation of the present disclosure, the last serving cell information may refer to last measured serving cell information. The last measured serving cell information may be different from the last logged serving cell information in measurement entry for MDT, because the UE also may store the last serving cell information which is not measured at logging interval. The last serving cell information may include ID of the last serving cell and measurement result of the last serving cell, which is not measured at logging interval. For example, the UE may set the field *servCellIdentity* of the current logged measurement entry to indicate global cell identity of the last measured serving cell that the UE was camping on. Further, the UE may set the field *measResultServCell* of the current logged measurement entry to include the measurement quantities of the last measured serving cell that the UE was camping on.

For the last measured cell, the measured time information may be included in the logged measurement entry with out-of-service detection information. With the measured time information, the UE may indicate, for example, the elapsed time since the time at which the logged measurement configuration was received. This may be done, in some scenarios, because the UE in RRC_IDLE state may perform UE-based cell measurement at a certain time which is not able to be estimated by network.

Further, when the UE in RRC_IDLE is in the "any cell selection" state, the UE may set the cell identity and/or cell quality to one fixed value which is set between the network and the UE (e.g., zero or a maximum value) as the serving cell information to indicate the "any cell selection" state or out-of-service. As an example, the UE may construct the logged measurement entry to include an indication that a suitable cell or acceptable cell is not found. The indication may either replace or supplement the cell ID and measurement result.

For example, the UE may set the field *servCellIdentity* of the current logged measurement entry as a minimum value (e.g., zero) or a maximum value to indicate out-of-service area situation. Further, the UE may set the field *measResultServCell* of the current logged measurement entry as minimum or maximum value to indicate an invalid situation.

If the UE is in the "any cell selection" state or if the cell identity is not available or the UE is in out-of-service, then in some implementations, the UE may further include an indication which indicates at least one of:
-- Logged information is measured during out-of-service, OR
-- Logged information is measured during the UE is in any cell selection state, OR
-- Logged information is measured during the cell identity is not available, OR
-- Logged information is measured to detect of out of service.

When the UE enters RRC CONNECTED state to a new cell of the network (e.g., whenever the UE enters such a state), the UE may provide (e.g., via RRC signaling message) information that the logged MDT (including information regarding out-of-service area) is available to the new cell if the UE has logged information.

In some systems, such as those that are compatible with LTE, the serving cell information may always be required for the logged MDT so that serving cell information is handled by any direction, even if the UE needs to log out-of-service area for the logged MDT. According to implementations of the present disclosure, the UE may be able to handle the serving cell information (e.g., as mandatory information) when constructing a logged measurement entry for out-of-service. As a specific example, the UE may fill out a mandatory field with specific information, so that the network may realize information regarding out-of-service area in a more efficient manner.

According to implementations of the present disclosure, the UE may perform measurement logging procedure as follows, while the T330 timer is running:
1> if measurement logging is suspended:
2> if during the last logging interval the IDC problems detected by the UE is resolved, resume measurement logging;
1> if not suspended, perform the logging in accordance with the following:
2> if targetMBSFN-AreaList is included in VarLogMeasConfig:
3> if the UE is camping normally on an E-UTRA cell or is connected to E-UTRA; and
3> if the RPLMN is included in plmn-IdentityList stored in VarLogMeasReport; and
3> if the PCell (in RRC CONNECTED) or cell where the UE is camping (in RRC_IDLE) is part of the area indicated by areaConfiguration if configured in VarLogMeasConfig:
4> for MBSFN areas, indicated in targetMBSFN-AreaList, from which the UE is receiving MBMS service:
5> perform MBSFN measurements in accordance with the performance requirements;

In some implementations, when configured to perform MBSFN measurement logging by targetMBSFN-AreaList, the UE is not required to receive additional MBSFN subframes, i.e. logging is based on the subframes corresponding to the MBMS services the UE is receiving.
5> perform logging at regular time intervals as defined by the logginglnterval in VarLogMeasConfig, but only for those intervals for which MBSFN measurement results are available;
2> else if:
3> if the UE is in any cell selection state:
4> perform the logging at regular time intervals, as defined by the logginglnterval in VarLogMeasConfig;
3> else if the UE is camping normally on an E-UTRA cell and if the RPLMN is included in plmn-IdentityList stored in VarLogMeasReport and, if the cell is part of the area indicated by areaConfiguration if configured in VarLogMeasConfig:
4> perform the logging at regular time intervals, as defined by the logginglnterval in VarLogMeasConfig;
2> when adding a logged measurement entry in VarLogMeasReport, include the fields in accordance with the following:
3> if the UE detected IDC problems during the last logging interval:
4> if measResultServCell in VarLogMeasReport is not empty:
5> include InDeviceCoexDetected;
5> suspend measurement logging from the next logging interval;
4> else:
5> suspend measurement logging;

The UE may detect the start of IDC problems.
3> set the relativeTimeStamp to indicate the elapsed time since the moment at which the logged measurement configuration was received;
3> if detailed location information became available during the last logging interval, set the content of the locationlnfo as follows:
4> include the locationCoordinates;
3> if wlan-NameList is included in VarLogMeasConfig:
4> if detailed WLAN measurements are available:
5> include logMeasResultListWLAN, in order of decreasing RSSI for WLAN APs;
3> if bt-NameList is included in VarLogMeasConfig:
4> if detailed Bluetooth measurements are available:
5> include logMeasResultListBT, in order of decreasing RSSI for Bluetooth beacons;
3> if targetMBSFN-AreaList is included in VarLogMeasConfig:
4> for each MBSFN area, for which the mandatory measurements result fields became available during the last logging interval:
5> set the rsrpResultMBSFN, rsrqResultMBSFN to include measurement results that became available during the last logging interval;
5> include the fields signallingBLER-Result or dataBLER-MCH-ResultList if the concerned BLER results are availble,
5> set the mbsfn-AreaId and carrierFrequency to indicate the MBSFN area in which the UE is receiving MBSFN transmission;
4> if in RRC_CONNECTED:
5> set the servCellIdentity to indicate global cell identity of the PCell;
5> set the measResultServCell to include the layer 3 filtered measured results of the PCell;
5> if available, set the measResultNeighCells to include the layer 3 filtered measured results of SCell(s) and neighbouring cell(s) measurements that became available during the last logging interval, in order of decreasing RSRP, for at most the following number of cells: 6 intra-frequency and 3 inter-frequency cells per frequency and according to the following:
6> for each cell included, include the optional fields that are available;
5> if available, optionally set the measResultNeighCells to include the layer 3 filtered measured results of neighbouring cell(s) measurements that became available during the last logging interval, in order of decreasing RSCP(UTRA)/RSSI(GERAN)/PilotStrength(cdma2000), for at most the following number of cells: 3 inter-RAT cells per frequency (UTRA, cdma2000)/set of frequencies (GERAN), and according to the following:
6> for each cell included, include the optional fields that are available;
4> if in RRC_IDLE:
5> set the servCellIdentity to indicate global cell identity of the serving cell;
5> set the measResultServCell to include the quantities of the serving cell;
5> if available, set the measResultNeighCells, in order of decreasing ranking-criterion as used for cell re-selection, to include neighbouring cell measurements that became available during the last logging interval for at most the following number of neighbouring cells: 6 intra-frequency and 3 inter-frequency neighbours per frequency and according to the following:
6> for each neighbour cell included, include the optional fields that are available;
5> if available, optionally set the measResultNeighCells, in order of decreasing ranking-criterion as used for cell re-selection, to include neighbouring cell measurements that became available during the last logging interval, for at most the following number of cells: 3 inter-RAT cells per frequency (UTRA, cdma2000)/set of frequencies (GERAN), and according to the following:
6> for each cell included, include the optional fields that are available;
4> for the cells included according to the previous (i.e. covering previous and current serving cells as well as neighbouring EUTRA cells) include results according to the extended RSRQ if corresponding results are available according to the associated performance requirements;
4> for the cells included according to the previous (i.e. covering previous and current serving cells as well as neighbouring EUTRA cells) include RSRQ type if the result was based on measurements using a wider band or using all OFDM symbols;

The UE includes the latest results in accordance with the performance requirements. E.g. RSRP and RSRQ results are available only if the UE has a sufficient number of results/ receives a sufficient number of subframes during the logging interval.
3> else:
4> if the UE is in any cell selection state:
5> set *anyCellSelectionDetected* to indicate the detection of no suitable or no acceptable cell found;
5> set the *servCellIdentity* to indicate global cell identity of the last logged cell that the UE was camping on;
5> set the *measResultServCell* to include the quantities of the last logged cell the UE was camping on.

The field *anyCellSelectionDetected* may indicate the detection of the "any cell selection" state. The UE in the "any cell selection" state may set this field, for example, when performing the logging of measurement results in RRC_IDLE and when there is no suitable cell or no acceptable cell found. Further, the field *servCellIdentity* may indicate an ID of a serving cell. Further, the field *measResultServCell* may indicate a measurement result of the serving cell.

In some implementations, if the UE is in the "any cell selection" state, then the UE may operate as follows.
4> if no suitable cell is found at the current logging interval and the *outOfServiceLog* is included in VarLogMeasConfig:
5> set *outOfServiceDetected* to indicate the detection of out of service;
5> set the *servCellIdentity* to indicate global cell identity of the last logged cell that the UE was camping on;
5> set the *measResultServCell* to include the quantities of the last logged cell the UE was camping on.

The field *outOfServiceLog* may indicate logged indication for an out-of-service area. The field *outOfServiceDetected* may indicate that the out-of-service area is detected. In some implementations, the UE, upon receiving the *LoggedMeasurementConfiguration* message, may store the received *outOfServiceLog,* if included, in *VarLogMeasConfig.*

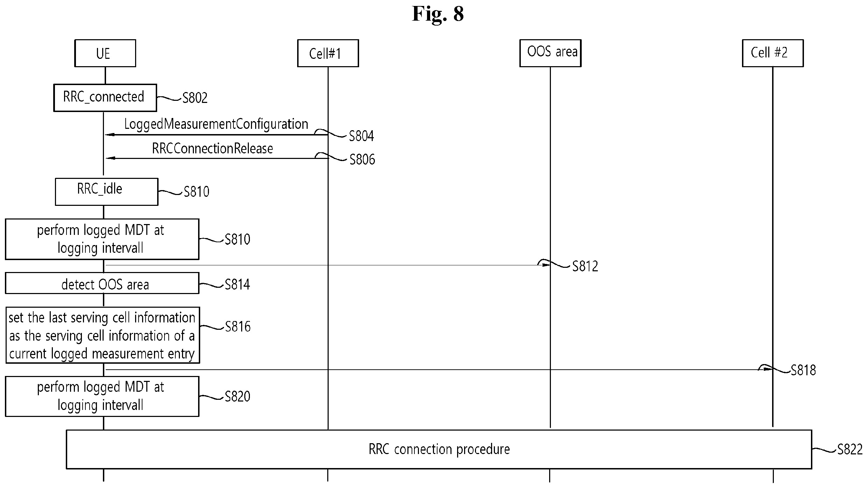

FIG. 8 shows an example of constructing logged measurement entry according to an implementation of the present disclosure.

In step S802, the UE is in RRC CONNECTED state on a serving cell. In this implementation, the serving cell may be cell #1.

In step S804, the UE may receive configuration for logged measurement from the serving cell. An eNB of the serving cell informs the UE that setting the last serving cell information as the serving cell information of a current logged measurement entry. In some implementations, the eNB may inform to the UE that setting log value indicating out-of-service when the UE is in out-of-service area.

In step S806, the UE may receive an RRC connection release message from the serving cell.

In step S808, the UE may enter RRC_IDLE state.

In step S810, the UE may perform logged MDT procedure, for example at a logging interval. During the MDT procedure, the UE may acquire measurement results of the serving cell. The UE may log the ID and the measurement result of the current serving cell.

In step S812, the UE may move to an out-of-service area during a DRX period.

In step S814, the UE may detect the out-of-service area, for example at a logging interval.

In step S816, the UE may set the last serving cell information as the serving cell information of a current logged measurement entry. In this example, the last logged serving cell information may include an ID of cell #1 and a measurement result of cell #1. Thus, in some implementations, the UE may set the current logged measurement entry including the last logged serving cell information in series.

In step S818, the UE may move to a new serving cell, e.g., cell #2 in this example, during the DRX period.

In step S820, the UE may perform logged MDT procedure, for example at a logging interval. During the MDT procedure, the UE may acquire a measurement result of the new serving cell. In some implementations, the UE may log the ID and the measurement result of the current serving cell.

In step S822, the UE may perform an RRC connection procedure. By the RRC connection procedure, the UE may inform that the logged information is available.

According to implementations of the present disclosure, the network may acquire information regarding out-of-service based on serving cell information of the logged measurement entry being repeatedly logged in series.

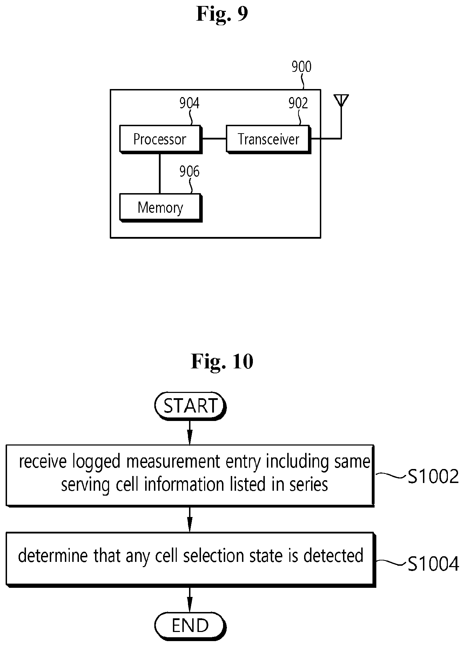

FIG. 9 shows an example of a structure of a UE according to an implementation of the present disclosure.

According to an implementation of the present disclosure, the UE 900 may comprise at least one transceiver, such as transceiver 902, at least one processor, such as processor 904, and at least one computer memory, such as memory 906. In the example of FIG. 9, the memory 906 is coupled to the processor 904, and stores a variety of information that may be processed by the processor 904. The transceiver 902 is coupled to the processor 904, and transmits and/or receives a radio signal. The processor 904 implements the proposed functions, procedures, and/or methods when executing information (e.g., instructions) stored in the memory 906. In the aforementioned implementations, an operation of the UE 900 may be implemented by the processor 904.

The processor 904 may implement various types of processing technologies. For example, the processor 904 may include application-specific integrated circuit (ASIC), other chipset, logic circuit and/or data processing device. The memory 906 may include read-only memory (ROM), random access memory (RAM), flash memory, memory card, storage medium and/or other storage device. The transceiver 902 may include baseband circuitry to process radio frequency signals. When the implementations are implemented in software, the techniques described herein can be implemented with modules (e.g., procedures, functions, and so on) that perform the functions described herein. The modules can be stored in memories and executed by processor 904. The memory 906 can be implemented within the processor 904 or external to the processor 904 in which case those can be communicatively coupled to the processor 904 via various means as is known in the art.

The processor 904 may execute instructions stored in memory 906 to perform operations described in the foregoing, such as constructing logged measurement entry to include information on last logged cell that the UE was camping on as a current serving cell information, when the "any cell selection" state is detected. The last logged cell may be a latest cell that the UE was camped on before the UE enters the "any cell selection" state. The information regarding the last logged cell may include an identity of the last logged cell and a measurement result of the last logged cell. The "any cell selection" state may be a state that the UE performs cell selection process to find a suitable cell or acceptable cell to camp on. The logged measurement entry may further include indication indicating detection of no suitable cell or acceptable cell. The logged measurement entry may include information on last logged cell repeated in series to inform detection of the "any cell selection" state. The logged measurement entry may be constructed when the UE is in radio resource control (RRC) idle state.

The processor 904 may be configured to control the transceiver 902 to transmit the logged measurement entry to a network. The logged measurement entry may be transmitted when the UE is in RRC connected state.

FIG. 10 shows an example of constructing logged measurement entry according to an implementation of the present disclosure. The procedures described below may be performed by at least one processor for a base station (BS).

In step S1002, the processor(s) may receive logged measurement entry including same serving cell information listed in series.

In step S1004, the processor(s) determine that an "any cell selection" state is detected.

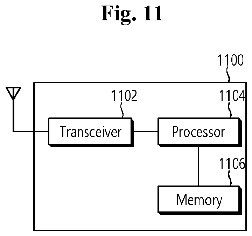

FIG. 11 shows an example of a structure of a network according to an implementation of the present disclosure. In this implementation, the network may include a base station (BS) 1100, and the BS 1100 may be at least one of eNB or gNB, and the network also may be referred as a serving cell.

According to an implementation of the present disclosure, the BS 1100 may include at least one transceiver, such as transceiver 1102, at least one processor, such as processor 1104, and at least one computer memory, such as memory 1106. The memory 1106 is coupled to the processor 1104, and stores a variety of information (e.g., instructions) that may be processed by the processor 1104. The transceiver 1102 is coupled to the processor 1104, and transmits and/or receives a radio signal. The processor 1104 may execute instructions stored in memory 1106 to implement the functions, procedures, and/or methods described in the foregoing. In the aforementioned implementations, an operation of the BS 1100 may be implemented by the processor 1104 executing instructions stored in memory 1106.

The processor 1104 may include application-specific integrated circuit (ASIC), other chipset, logic circuit and/or data processing device. The memory 1106 may include read-only memory (ROM), random access memory (RAM), flash memory, memory card, storage medium and/or other storage device. The transceiver 1102 may include baseband circuitry to process radio frequency signals. When the implementations are implemented in software, the techniques described herein can be implemented with modules (e.g., procedures, functions, and so on) that perform the functions described herein. The modules can be stored in memory 1106 and executed by processor 1104. The memory 1106 can be implemented within the processor 1104 or external to the processor 1104 in which case those can be communicatively coupled to the processor 1104 via various means as is known in the art.

The processor 1104 may execute instructions stored in memory 1106 to control the transceiver 1102 to receive logged measurement entry including same serving cell information listed in series.

The processor 1104 may execute instructions stored in memory 1106 to determine that any cell selection state is detected.

In view of the example systems and techniques described herein, methodologies that may be implemented in accordance with the disclosed subject matter have been described with reference to several flow diagrams. While for purposed of simplicity, the methodologies are shown and described as a series of steps or blocks, it is to be understood and appreciated that the claimed subject matter is not limited by the order of the steps or blocks, as some steps may occur in different orders or concurrently with other steps from what is depicted and described herein.

The invention and its embodiments are not limited to the examples described in this specification but may vary within the scope of the appended claims.

## Claims

1. A method performed by a user equipment, UE, in a wireless communication system, the method comprising:
receiving (S702) a logged measurement configuration from a network;
performing (S704) a measurement logging based on the received logged measurement configuration; and
transmitting (S706) a logged measurement to the network, based on the measurement logging,
wherein transmitting the logged measurement to the network comprises:
based on the UE being in an "any cell selection" state, transmitting the logged measurement which comprises information regarding a last logged cell that the UE was camping on before the UE entered the "any cell selection" state.

2. The method of claim 1, wherein the information regarding the last logged cell that the UE was camping on comprises a global cell identity of the last logged cell that the UE was camping on.

3. The method of claim 1, wherein the information regarding the last logged cell that the UE was camping on comprises measurement quantities of the last logged cell that the UE was camping on.

4. The method of claim 3, wherein the measurement quantities of the last logged cell comprise at least one of a reference signal received power, RSRP, a reference signal received quality, RSRQ, a received signal code power, RSCP, a signal-to-noise ratio, a primary common control physical channel, P-CCPCH, RSCP, a received signal level, or a pilot pseudonoise, pn, phase and pilot strength.

5. The method of claim 1, wherein the logged measurement further comprises an indication that the "any cell selection" state is detected.

6. The method of claim 5, wherein the "any cell selection" state corresponds to a state in which the UE did not find a suitable cell or acceptable cell to camp on.

7. The method of claim 5, wherein the "any cell selection" state is a state in which the UE performs a cell selection process to find a suitable cell or acceptable cell to camp on.

8. The method of claim 1, wherein the last logged cell is a most recent cell that the UE was camped on before the UE enters the "any cell selection" state.

9. The method of claim 1, wherein performing the measurement logging comprises: performing the measurement logging when the UE is in a radio resource control, RRC, idle state, and
wherein transmitting the logged measurement comprises: transmitting the logged measurement when the UE is in an RRC connected state.

10. A user equipment, UE, (900) configured to operate in a wireless communication system, the UE comprising:
at least one radio frequency, RF, transceiver (902);
at least one processor (904); and
at least one memory (906) operably connectable to the at least one processor and storing instructions that, when executed, cause the at least one processor to perform operations comprising:
receiving, via the at least one RF transceiver, a logged measurement configuration from a network;
performing a measurement logging based on the received logged measurement configuration; and
transmitting, via the at least one RF transceiver, a logged measurement to the network, based on the measurement logging,
wherein transmitting the logged measurement result to the network comprises:
based on the UE being in an "any cell selection" state, transmitting the logged measurement which comprises information regarding a last logged cell that the UE was camping on before the UE entered the "any cell selection" state.

11. The UE of claim 10, wherein the information regarding the last logged cell that the UE was camping on comprises a global cell identity of the last logged cell that the UE was camping on.

12. The UE of claim 10, wherein the information regarding the last logged cell that the UE was camping on comprises measurement quantities of the last logged cell that the UE was camping on.

13. The UE of claim 12, wherein the measurement quantities of the last logged cell comprise at least one of a reference signal received power, RSRP, a reference signal received quality, RSRQ, a received signal code power, RSCP, a signal-to-noise ratio, a primary common control physical channel, P-CCPCH, RSCP, a received signal level, or a pilot pseudonoise, pn, phase and pilot strength.

14. The UE of claim 10, wherein the logged measurement further comprises an indication that the "any cell selection" state is detected.

15. The UE of claim 14, wherein the "any cell selection" state corresponds to a state in which the UE did not find a suitable cell or acceptable cell to camp on.

## Patentansprüche

1. Verfahren, durchgeführt von einer Benutzerausrüstung, UE, in einem drahtlosen Kommunikationssystem, wobei das Verfahren Folgendes umfasst:
Empfangen (S702) einer Konfiguration einer protokollierten Messung von einem Netzwerk,
Durchführen (S704) einer Messungsprotokollierung, basierend auf der empfangenen Konfiguration einer protokollierten Messung,
Übertragen (S706) einer protokollierten Messung an das Netzwerk, basierend auf der Messungsprotokollierung,
wobei das Übertragen der protokollierten Messung an das Netzwerk Folgendes umfasst:
basierend darauf, dass sich die UE in einem "beliebige Zellauswahl"-Zustand befindet, Übertragen der protokollierten Messung, die Informationen bezüglich einer zuletzt protokollierten Zelle umfasst, welche die UE besetzt hat, bevor die UE in den "beliebige Zellauswahl"-Zustand eintrat.

2. Verfahren nach Anspruch 1, wobei die Informationen bezüglich der zuletzt protokollierten Zelle, welche die UE besetzt hat, eine globale Zellidentität der zuletzt protokollierten Zelle, welche die UE besetzt hat, umfassen.

3. Verfahren nach Anspruch 1, wobei die Informationen bezüglich der zuletzt protokollierten Zelle, welche die UE besetzt hat, Messgrößen der zuletzt protokollierten Zelle, zuletzt protokollierten Zelle, welche die UE besetzt hat, umfassen.

4. Verfahren nach Anspruch 3, wobei die Messgrößen der zuletzt protokollierten Zelle mindestens eines des Folgenden umfassen: eine Referenzsignal-Empfangsleistung (RSRP), eine Referenzsignal-Empfangsqualität des (RSRQ), eine Signalcode-Empfangsleistung (RSCP), ein Signal-Rausch-Verhältnis, eine P-CCPCH(Primary Common Control Physical Channel)-RSCP, ein Empfangssignalpegel oder eine Pilot-Pseudorauschen(PN)-Phase und Pilotstärke.

5. Verfahren nach Anspruch 1, wobei die protokollierte Messung ferner eine Angabe umfasst, dass der "beliebige Zellauswahl"-Zustand erkannt wird.

6. Verfahren nach Anspruch 5, wobei der "beliebige Zellauswahl"-Zustand einem Zustand entspricht, in dem die UE keine geeignete Zelle oder akzeptable Zelle zum Besetzen findet.

7. Verfahren nach Anspruch 5, wobei der "beliebige Zellauswahl"-Zustand ein Zustand ist, in dem die UE einen Zellauswahlprozess ausführt, um eine geeignete Zell oder eine akzeptable Zell zum Besetzen zu finden.

8. Verfahren nach Anspruch 1, wobei die letzte protokollierte Zelle eine Zelle ist, die jüngst von der UE besetzt wurde, bevor die UE in den "beliebige Zellauswahl"-Zustand eintrat.

9. Verfahren nach Anspruch 1, wobei das Durchführen der Messungsprotokollierung Folgendes umfasst: Durchführen der Messungsprotokollierung, wenn sich die UE in einem RRC(Radio Resource Control)-Ruhezustand befindet, und
wobei das Übertragen der protokollierten Messung Folgendes umfasst: Übertragen der protokollierten Messung, wenn sich die UE in einem RRC-Verbindungszustand befindet.

10. Benutzerausrüstung, UE (900), dafür konfiguriert, in einem drahtlosen Kommunikationssystem zu arbeiten, wobei die UE Folgendes umfasst:
mindestens einen Hochfrequenz(RF)-Sendeempfänger (902), mindestens einen Prozessor (904) und
mindestens einen Speicher (906), der funktionsfähig mit dem mindestens einen Prozessor verbindbar ist und Befehle speichert, die bei Ausführung den mindestens einen Prozessor veranlassen, Operationen durchzuführen, die Folgendes umfassen:
Empfangen einer Konfiguration einer protokollierten Messung von einem Netzwerk über den mindestens einen RF-Sendeempfänger,
Durchführen einer Messungsprotokollierung, basierend auf der empfangenen Konfiguration einer protokollierten Messung, und
Übertragen einer protokollierten Messung an das Netzwerk, basierend auf der Messungsprotokollierung, über den mindestens einen RF-Sendeempfänger,
wobei das Übertragen des protokollierten Messungsergebnisses an das Netzwerk Folgendes umfasst:
basierend darauf, dass sich die UE in einem "beliebige Zellauswahl"-Zustand befindet, Übertragen der protokollierten Messung, die Informationen bezüglich einer zuletzt protokollierten Zelle umfasst, welche die UE besetzt hat, bevor die UE in den Zellauswahlzustand eintrat.

11. UE nach Anspruch 10, wobei die Informationen bezüglich der zuletzt protokollierten Zelle, welche die UE besetzt hat, eine globale Zellidentität der zuletzt protokollierten Zelle, welche die UE besetzt hat, umfassen.

12. UE nach Anspruch 10, wobei die Informationen bezüglich der zuletzt protokollierten Zelle, welche die UE besetzt hat, Messgrößen der zuletzt protokollierten Zelle, zuletzt protokollierten Zelle, welche die UE besetzt hat, umfassen.

13. UE nach Anspruch 12, wobei die Messgrößen der zuletzt protokollierten Zelle mindestens eines des Folgenden umfassen: eine Referenzsignal-Empfangsleistung (RSRP), eine Referenzsignal-Empfangsqualität des (RSRQ), eine Signalcode-Empfangsleistung (RSCP), ein Signal-Rausch-Verhältnis, eine P-CCPCH(Primary Common Control Physical Channel)-RSCP, ein Empfangssignalpegel oder eine Pilot-Pseudorauschen(PN)-Phase und Pilotstärke.

14. UE nach Anspruch 10, wobei die protokollierte Messung ferner eine Angabe umfasst, dass der "beliebige Zellauswahl"-Zustand erkannt worden ist.

15. UE nach Anspruch 14, wobei der "beliebige Zellauswahl"-Zustand einem Zustand entspricht, in dem die UE keine geeignete Zelle oder akzeptable Zelle zum Besetzen gefunden hat.

## Revendications

1. Procédé exécuté par un équipement utilisateur, UE, dans un système de communication sans fil, le procédé comprenant :
la réception (S702) d'une configuration de mesure journalisée provenant d'un réseau ;
l'exécution (S704) d'une journalisation de mesure basée sur la configuration d'une mesure journalisée reçue ; et
la transmission (S706) d'une mesure journalisée au réseau, basée sur la journalisation de mesure,
dans lequel la transmission de la mesure journalisée au réseau comprend : sur la base de l'UE qui se trouve dans un état de « sélection de cellules », la transmission de la mesure journalisée qui comprend des informations concernant une dernière cellule journalisée sur laquelle l'UE a résidé avant que l'UE n'entre dans l'état de « sélection de cellules ».

2. Procédé selon la revendication 1, dans lequel les informations concernant la dernière cellule journalisée sur laquelle l'UE a résidé comprennent une identité de cellule globale de la dernière cellule journalisée sur laquelle l'UE a résidé.

3. Procédé selon la revendication 1, dans lequel les informations concernant la dernière cellule journalisée sur laquelle l'UE a résidé comprennent des quantités de mesure de la dernière cellule journalisée sur laquelle l'UE a résidé.

4. Procédé selon la revendication 3, dans lequel les quantités de mesure de la dernière cellule journalisée comprennent au moins un élément parmi une puissance reçue d'un signal de référence, RSRP, une qualité reçue d'un signal de référence, RSRQ, une puissance de code d'un signal reçu, RSCP, un rapport signal sur bruit, un RSCP de canal physique de contrôle commun primaire, P-CCPCH, un niveau de signal reçu ou une intensité pilote et une phase de pseudo-bruit, pn, pilote.

5. Procédé selon la revendication 1, dans lequel la mesure journalisée comprend en outre une indication que l'état de « sélection de cellules » est détecté.

6. Procédé selon la revendication 5, dans lequel l'état de « sélection de cellules » correspond à un état dans lequel l'UE n'a pas trouvé de cellule appropriée ou de cellule acceptable sur laquelle résider.

7. Procédé selon la revendication 5, dans lequel l'état de « sélection de cellules » est un état dans lequel l'UE exécute un processus de sélection de cellules pour trouver une cellule appropriée ou une cellule acceptable sur laquelle résider.

8. Procédé selon la revendication 1, dans lequel la dernière cellule journalisée est une cellule plus récente sur laquelle l'UE a résidé avant que l'UE n'entre dans l'état de « sélection de cellules ».

9. Procédé selon la revendication 1, dans lequel exécuter la journalisation de mesure comprend :
l'exécution de la journalisation de mesure lorsque l'UE se trouve dans un état inactif de contrôle de ressources radio, RRC, et
dans lequel la transmission de la mesure journalisée comprend : la transmission de la mesure journalisée lorsque l'UE se trouve dans un état connecté RRC.

10. Équipement utilisateur, UE (900) conçu pour fonctionner dans un système de communication sans fil, l'UE comprenant :
au moins un émetteur-récepteur de fréquence radio, RF (902) ;
au moins un processeur (904) ; et
au moins une mémoire (906) pouvant être connectée de manière fonctionnelle au ou aux processeurs et stockant des instructions qui, lorsqu'elles sont exécutées, amènent le ou les processeurs à exécuter des opérations comprenant :
la réception, par le biais du ou des émetteurs-récepteurs RF, d'une configuration de mesure journalisée provenant d'un réseau ;
l'exécution d'une journalisation de mesure basée sur la configuration d'une mesure journalisée reçue ; et
la transmission, par le biais du ou des émetteurs-récepteurs RF, d'une mesure journalisée au réseau, basée sur la journalisation de mesure,
dans lequel la transmission du résultat de la mesure journalisée au réseau comprend :
sur la base de l'UE qui se trouve dans un état de « sélection de cellules », la transmission de la mesure journalisée qui comprend des informations concernant une dernière cellule journalisée sur laquelle l'UE a résidé avant que l'UE n'entre dans l'état de « sélection de cellules ».

11. UE selon la revendication 10, dans lequel les informations concernant la dernière cellule journalisée sur laquelle l'UE a résidé comprennent une identité de cellule globale de la dernière cellule journalisée sur laquelle l'UE a résidé.

12. UE selon la revendication 10, dans lequel les informations concernant la dernière cellule journalisée sur laquelle l'UE a résidé comprennent des quantités de mesure de la dernière cellule journalisée sur laquelle l'UE a résidé.

13. UE selon la revendication 12, dans lequel les quantités de mesure de la dernière cellule journalisée comprennent au moins un élément parmi une puissance reçue d'un signal de référence, RSRP, une qualité reçue d'un signal de référence, RSRQ, une puissance de code d'un signal reçu, RSCP, un rapport signal sur bruit, un RSCP de canal physique de contrôle commun primaire, P-CCPCH, un niveau de signal reçu ou une intensité pilote et une phase de pseudo-bruit, pn, pilote.

14. UE selon la revendication 10, dans lequel la mesure journalisée comprend en outre une indication que l'état de « sélection de cellules » est détecté.

15. UE selon la revendication 14, dans lequel l'état de « sélection de cellules » correspond à un état dans lequel l'UE n'a pas trouvé de cellule appropriée ou de cellule acceptable sur laquelle résider.
